Europäisches Patentamt

(19) European Patent Office

Office européen des brevets

(11) Veröffentlichungsnummer: **0 049 931**
**A2**

(12) **EUROPÄISCHE PATENTANMELDUNG**

(21) Anmeldenummer: **81201121.1**

(22) Anmeldetag: **08.10.81**

(51) Int. Cl.³: **G 01 B 11/00**

(30) Priorität: **14.10.80 DD 224521**

(43) Veröffentlichungstag der Anmeldung:
**21.04.82 Patentblatt 82/16**

(84) Benannte Vertragsstaaten:
**AT CH DE GB IT LI**

(71) Anmelder: **VEB Feinmesszeugfabrik Suhl**
**Rimbachstrasse 53**
**DDR-6000 Suhl(DD)**

(72) Erfinder: **Reimann, Gerhard, Dipl.-Ing.**
**Fröbelstrasse 8**
**DDR-6300 Ilmenau(DD)**

(72) Erfinder: **Stötzer, Jürgen, Dipl.-Ing.**
**Sandgasse 1**
**DDR-6051 Dietzhausen(DD)**

(72) Erfinder: **Bergmann, Rolf**
**Leninring 24**
**DDR-6000 Suhl(DD)**

(74) Vertreter: **Bovard, Fritz Albert et al,**
**Bovard & Cie Patentanwälte VSP Optingenstrasse 16**
**CH-3000 Bern 25(CH)**

(54) Inkrementales Längenmessgerät.

(57) Um ein inkrementales Längenmessgerät integrierter Kolbendämpfung und justierbarer Anordnung des Teilungsträgers und der fotoelektrischen Ableseeinrichtung zu erhalten, das eine hohe Genauigkeit besitzt und leicht zu bedienen ist, sind elastische Verbindungsglieder (5, 15) mit Verstellelementen (14, 17) zwischen dem Tastbolzen (1) und dem Teilungsträger (12) sowie zwischen der fotoelektrischen Ableseeinrichtung (16) und dem Grundkörper (3) angeordnet. Es ist eine Dämpfungsvorrichtung vorgesehen, die in an sich bekannter Weise aus einem Kolben (9) und einem Zylinder (8) besteht, von denen ein Teil mit dem Grundkörper und das andere Teil mit dem Tastbolzen verbunden ist, wobei der Kolben schwimmend angeordnet ist.

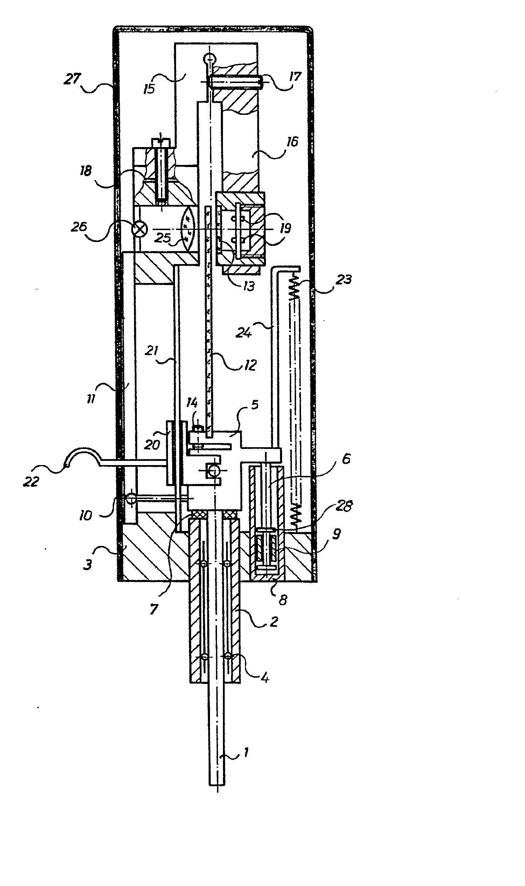

## Patentansprüche

1. Inkrementales Längenmeßgerät, bei dem in einem Grundkörper ein die Meßgröße übertragender Tastbolzen axial verschiebbar angeordnet ist, mit dem ein Teilungsträger verbunden ist, der mit einer fotoelektrischen Ableseeinrichtung zusammenwirkt, die am Grundkörper einstellbar befestigt ist und beim Bewegen des Tastbolzens der Meßgröße proportionale Signale erzeugt und bei dem eine Dämpfungsvorrichtung die Verschiebegeschwindigkeit des Tastbolzens begrenzt, gekennzeichnet dadurch, daß elastische Verbindungsglieder (5) (15) mit Verstellelementen (14) (17) zwischen dem Tastbolzen (1) und dem Teilungsträger (12) sowie zwischen mindestens einem Teil der fotoelektrischen Ableseeinrichtung (16) und dem Grundkörper (3) vorgesehen sind.

2. Inkrementales Längenmeßgerät nach Anspruch 1, gekennzeichnet dadurch, daß die Dämpfungsvorrichtung in an sich bekannter Weise aus einem Zylinder (8) und einem Kolben (9) besteht, deren gemeinsame Achse im wesentlichen zur Achse des Tastbolzens (1) parallel ist und von denen ein Teil mit dem Tastbolzen (1) und das andere Teil mit dem Grundkörper (3) verbunden ist und von denen der Kolben (9) schwimmend angeordnet ist.

3. Inkrementales Längenmeßgerät nach Anspruch 2, gekennzeichnet dadurch, daß zwischen dem Tastbolzen (1) und dem zugehörigen elastischen Verbindungsglied (5) ein Ring (7) aus Gummi oder Kunststoff angebracht ist.

Benutzt man das inkrementale Längenmeßgerät ohne
die Verstellvorrichtung für den Tastbolzen, besitzt
das Gerät keine Dämpfung. Bei der Bedienung der Verstellvorrichtung für den Tastbolzen macht sich das
größere Gewicht gegenüber einem herkömmlichen Drahtauslöser durch die dort eingebaute Dämpfung unangenehm bemerkbar. Durch die lose Kopplung der Anlüftung mit dem Tastbolzen versagt die Dämpfung, wenn
der Tastbolzen direkt durch ein Meßobjekt angehoben
wird.

Ein weiteres Längenmeßgerät ist aus der DE OS 2111649
bekannt, das eine eingebaute Kolbendämpfung mit
starrem Kolben aufweist.

Ebenfalls mit einem starrem Kolben arbeitet die
Dämpfungseinrichtung eines Meßgerätes, das in der
DE OS 2615676 beschrieben ist. Die Funktionstüchtigkeit beider Dämpfungen ist nur bei Einhaltung hoher
Fertigungsgenauigkeiten gegeben.

Ziel der Erfindung ist es, die Mängel des Standes
der Technik zu beseitigen und ein inkrementales
Längenmeßgerät mit hoher Genauigkeit und einfacher
Bedienung zu schaffen.

Der Erfindung liegt die Aufgabe zugrunde, ein
inkrementales Längenmeßgerät zu schaffen, das eine
ständig wirksame integrierte Kolbendämpfung aufweist
und in dem der Teilungsträger und die fotoelektrische
Ableseeinrichtung justierbar angeordnet sind.

Die Aufgabe wird erfindungsgemäß dadurch gelöst,
daß elastische Verbindungsglieder mit Verstellelementen, die als Schrauben ausgebildet sind, zwischen
dem Tastbolzen und dem Teilungsträger sowie zwischen
mindestens einem Teil der fotoelektrischen Ableseeinrichtung und dem Grundkörper vorgesehen sind.

Um auf eine hohe Herstellungsgenauigkeit für die
Einzelteile verzichten zu können besteht die

Dämpfungsvorrichtung in an sich bekannter Weise aus einem Zylinder und einem Kolben, deren gemeinsame Achse im wesentlichen zur Achse des Tastbolzens parallel ist und von denen ein Teil mit dem Tastbolzen und das andere Teil mit dem Grundköper verbunden ist und der Kolben ist schwimmend angeordnet. Weiterhin ist zur erfindungsgemäßen Lösung der Aufgabe ein rechtwinklig zur Achse des Tastbolzens gerichteter Kugelbolzen in dem zwischen dem Tastbolzen und dem Teilungsträger angeordneten elastischen Verbindungsglied exzentrisch drehbar gelagert und ragt mit seiner Kugel in eine am Grundkörper einstellbar befestigte Geradführung und unterhalb des elastischen Verbindungsgliedes auf dem Tastbolzen ein Ring aus Gummi oder Kunststoff angebracht.

Die wesentlichen Vorteile der Erfindung liegen darin, daß die Einzelteile zur genauen Anordnung des Teilungsträgers, der fotoelektrischen Ableseeinrichtung sowie der Dämpfungsvorrichtung mit geringerer Genauigkeit hergestellt werden können, wobei die hohe Auflösung des inkrementalen Längenmeßgerätes erhalten bleibt.

Durch die schwimmende Anordnung des Kolbens ist eine gute Dämpfungswirkung gesichert und es treten keine Querkräfte auf, die sich auf die Genauigkeit des inkrementalen Längenmeßgerätes auswirken.

Eine geringe Baugröße wird durch die parallele Anordnung der Dämpfungsvorrichtung und des Tastbolzens erreicht.

Beim Anwender kann jederzeit die genaue Einstellung des Teilungsträgers und der fotoelektrischen Ableseeinrichtung mittels der Verstellelemente an den elastischen Verbindungsgliedern neu vorgenommen werden.

4

Anhand der Zeichnung soll nachstehend die Erfindung
erläutert werden.

In der Bohrung des Spannschaftes 2, der in den Grundkörper 3 eingepreßt ist, läuft in der Wälzführung 4
der Tastbolzen 1. Am Ende des Tastbolzens 1 ist das
elastische Verbindungsglied 5 angebracht. Unterhalb
vom elastischen Verbindungsglied 5 sitzt der Ring 7
auf dem Tastbolzen 1, der ein weiches Aufsetzen im
unteren Anschlagpunkt ermöglicht. Einstellbar ist
die Kolbenstange 6 am elastischen Verbindungsglied 5
so angeordnet, daß ihre Achse parallel zur Bewegungsrichtung des Tastbolzens 1 verläuft. Fluchtend zur
Achse der Kolbenstange 6 ist im Grundkörper 3 der
Zylinder 8 eingesetzt, in dessen Bohrung, der auf
der Kolbenstange 6 zwischen zwei Scheiben 28 radial
verschiebbare Kolben 9, in einem Dämpfungsmedium
läuft. Durch die schwimmende Anordnung des Kolbens 9
wird ein Klemmen verhindert, wenn eine Abweichung
von der Zylinderform oder zwischen der Bewegungsrichtung des Tastbolzens 1 und der Achse der Kolbenstange 6 auftritt. Gegenüber der Koppelstelle der
Kolbenstange 6 am elastischen Verbindungsglied 5
ragt ein exzentrisch drehbarer Kugelbolzen 10 senkrecht zur Geräteteilungsebene aus dem elastischen
Verbindungsglied 5 hervor. In einer einstellbaren
Geradführung 11 wird der Kugelbolzen 10 so geführt,
daß der Teilungsträger 12 bei Bewegung des Tastbolzens 1
gegen Verdrehung gesichert ist. Durch eine Drehung
des Kugelbolzens 10 im elastischen Verbindungsglied 5
kann der Teilungsträger 12 um die Bewegungsrichtung
des Tastbolzens 1 zum Zweck der Parallelstellung
mit der fotoelektrischen Ableseeinrichtung 16 geschwenkt werden. Der Teilungsträger 12 sitzt im
elastischen Verbindungsglied 5 fest und kann mittels Verstellelement 14 um eine am Ende seiner Teilungsebene und parallel zur Teilung verlaufende Achse gekippt werden kann, bis der Teilungsträger 12 mit der Bewegungsrichtung des Tastbolzens 1 fluchtet.

Um eine, senkrecht zur Geräteteilungsebene verlaufende Achse, gebildet durch das elastische Verbindungsglied 15, muß die fotoelektrische Ableseeinrichtung 16 durch Betätigen des Verstellelementes 17 so lange gekippt werden, bis sie parallel zum Teilungsträger 12 angeordnet ist. Über eine Flachführung 18 ist das elastische Verbindungsglied 15 mit dem Grundkörper 3 in der Weise verbunden, daß durch Verschieben des elastischen Verbindungsgliedes 15 senkrecht zur Geräteteilungsebene der Abstand zwischen dem Lesegitter 13 der fotoelektrischen Ableseeinrichtung 16 und dem Teilungsträger 12 so eingestellt werden kann, daß in der Ebene der Wandler 19 ein Streifenbild mit maximalem Kontrast entsteht.

Drehbar um eine in der Geräteteilungsebene liegende Achse ist der Mitnehmer 20 am elstischen Verbindungsglied 5 angekoppelt und ist zur Vermeidung von Querkräften, die auf den Tastbolzen 1 wirken in einer Hilfsführung 21 geführt. Elastisch ist der Anlüfthebel 22 am Mitnehmer 20 befestigt, um auch bei ruckartigem Anlüften eine zwangsfreie Bewegung des Tastbolzens 1 zu ermöglichen.

Für das inkrementale Längenmeßgerät ist eine bestimmte Meßkraft vorgesehen, die aufgebracht wird, durch Aufspannen einer Zugfeder 23 zwischen dem Grundkörper 3 und dem Bügel 24.

Bei einer Bewegung des Tastbolzens 1 verschiebt sich der Teilungsträger 12 gegenüber dem Lesegitter 13, so daß die durchleuchteten Teilungen in der Ebene der Wandler 19 sich periodisch ändernde Kontrastbilder erzeugen. Das von der Lampe 26 kommende Licht durchleuchtet den Kondensor 25, den Teilungsträger 12, das Lesegitter 13 und beleuchtet dann die Wandler 19. Eine Aufteilung des Lesegitters 13 in vier um ein Viertel der Geräteteilungskonstante zueinander versetzte Teilungsfelder liefert über die vier Wandler 19, die jeweils in der Mitte eines Teilungsfeldes sitzen, vier um $90°$ zueinander phasenverschobene analoge Primärsignale. Paarweise ($0°/180°$ und $90°/270°$) werden die analogen Primärsignale Differenzverstärkern zugeführt, an deren Ausgang die verstärkten Differenzsignale sin x und cos x anliegen, die dann einem zweifach arbeitenden Amplitudenanschnittsinterpolator zugeführt werden, der zwei um $90°$ phasenverschobene TTL-Impulsfolgen einschließlich der Negation mit der doppelten Frequenz der Primärsignale liefert. Die so erzeugten Digitalsignale gelangen über einen Eingangsschaltkreis mit digitaler Vierfachauswertung zum Zähler und zur Anzeige. Die zusammengefaßten elektronischen Baueinheiten zur Auswertung der Primärsignale der Wandler 19 sind in der Zeichnung nicht dargestellt.

Der am Tastbolzen 1 eingegebene Meßweg wird in µm angezeigt. Das inkrementale Längenmeßgerät ist durch das Gehäuse 27 abgeschlossen.

## Inkrementales Längenmeßgerät

Die Erfindung betrifft ein inkrementales Längenmeßgerät, bei dem in einem Grundkörper ein die
Meßgröße übertragender Tastbolzen axial verschiebbar angeordnet ist, der mit einer fotoelektrischen
Ableseeinrichtung zusammenwirkt, die am Grundkörper
einstellbar befestigt ist und beim Bewegen des Tastbolzens der Meßgröße proportionale Signale erzeugt
und bei dem eine Dämpfungsvorrichtung die Verschiebegeschwindigkeit des Tastbolzens begrenzt.

Bekannt ist ein inkrementales Längenmeßgerät,
das nach dem Komparatorprinzip aufgebaut ist, gekennzeichnet dadurch, daß fluchtend zur zu messenden
Strecke ein Meßbolzen verbunden mit einer Teilung
des Meßgerätes längsverschieblich angeordnet ist.
Meßfehler erster Ordnung, durch Kippen eines geführten Teils in seiner Führung, werden durch diese
Anordnung vermieden. In der DE AS 2508510 ist eine
solche Konstruktion beschrieben.

Bei der Relativbewegung von Gitterteilung und Abtastplatte werden durch Wandler Impulse erzeugt,
die in einem elektronischen Vor-/Rückwärtszähler
gezählt werden, welcher die Bewegung des Tastbolzens
in Ziffernform anzeigt.

Zur Verdrehsicherung der Gitterteilung springt am
Tastbolzen eine Lasche vor, die an einem fest eingepreßten Stift angelenkt ist. Nachteilig ist, daß
diese Anordnung nur bei Einhaltung enger Fertigungstoleranzen eine gute Hilfsführung darstellt, die
noch keine Einstellmöglichkeit für das Gitter bietet.

0049931

4. Inkrementales Längenmeßgrät nach Anspruch 3, gekennzeichnet dadurch, daß ein im wesentlichen rechtwinklig zur Achse des Tastbolzens (1) gerichteter Kugelbolzen (10) in dem zwischen dem Tastbolzen (1) und dem Teilungsträger (12) angeordneten elastischen Verbindungsglied (5) exzentrisch drehbar gelagert ist und mit seiner Kugel in eine am Grundkörper (3) einstellbar befestigte Geradführung (11) hineinragt.

5. Inkrementales Längenmeßgerät nach Anspruch 4, gekennzeichnet dadurch, daß die Verbindungselemente (14) (17) als Schrauben ausgebildet sind.